# EUROPÄISCHE PATENTSCHRIFT

(11) **EP 1 681 209 B1**
(45) Veröffentlichungstag und Bekanntmachung des Hinweises auf die Patenterteilung: **25.01.2012**
(21) Anmeldenummer: 05090363.2
(22) Anmeldetag: 29.12.2005
(51) Int. Cl.: B60R 21/231, B60R 21/233

(54) **Seitenairbageinrichtung**
Side airbag device
Dispositif de sac gonflable latéral

(30) Priorität: 14.01.2005 DE 102005002085
(43) Veröffentlichungstag der Anmeldung: 19.07.2006
(73) Patentinhaber: TAKATA - PETRI AG, 63743 Aschaffenburg (DE)
(72) Erfinder: Heudorfer, Benedikt, 89278 Nersingen (DE); Kraft, Michael, 89075 Ulm (DE); Schäfer, Stefan, 89155 Erbach (DE); Weyrich, Christian, 89231 Neu-Ulm (DE); Rist, Holger, 89160 Dornstadt (DE)
(74) Vertreter: Baumgärtel, Gunnar

(56) Entgegenhaltungen:
- EP-A- 0 980 796
- EP-A- 1 484 222
- DE-A1- 10 251 681
- DE-A1- 10 331 133
- US-A- 6 073 959
- US-A1- 2002 180 190
- US-A1- 2003 178 831

## Beschreibung

Die Erfindung bezieht sich auf eine Seitenairbageinrichtung mit den Merkmalen gemäß dem Oberbegriff des Anspruchs 1.

Eine gattungsbildende Seitenairbageinrichtung mit den Merkmalen des Oberbegriffs des Anspruchs 1 ist aus der Patentschrift DE 103 31 133 A1 bekannt.

Eine weitere Seitenairbageinrichtung ist beispielsweise aus der US-Patentschrift 6,695,340 B2 bekannt. Diese vorbekannte Seitenairbageinrichtung weist zum Schutz eines Fahrzeuginsassen einen Gasgenerator auf, der im Unfallfall einen Airbag der Seitenairbageinrichtung aufbläst. Der Airbag deckt im entfalteten Zustand einen Seitenwandabschnitt des Fahrzeugs ab, wodurch ein Aufschlagen des Fahrzeuginsassen, insbesondere des Kopfes des Fahrzeuginsassen, auf den Seitenwandabschnitt verhindert wird. Der Airbag weist neben seiner den Seitenwandabschnitt abdeckenden Hauptkammer bzw. Nutzkammer fingerähnliche Vorsprünge auf, die dazu dienen sollen, ein Wegbiegen der Hauptkammer von der Seitenwand zu verhindern.

Der Erfindung liegt die Aufgabe zugrunde, eine Seitenairbageinrichtung anzugeben, die ein besonders großes Maß an Sicherheit für den zu schützenden Fahrzeuginsassen bietet. Insbesondere soll bei der Seitenairbageinrichtung sichergestellt sein, dass sich der Airbag (=Gassack) stets zuverlässig entfaltet.

Diese Aufgabe wird ausgehend von einer Seitenairbageinrichtung der eingangs angegebenen Art erfindungsgemäß durch die kennzeichnenden Merkmale des Anspruchs 1 gelöst. Vorteilhafte Ausgestaltungen der Erfindung sind in Unteransprüchen angegeben.

Danach ist erfindungsgemäß vorgesehen, dass die Seitenairbageinrichtung Entfaltungssteuerungsmittel aufweist, die den Airbag bei dessen Entfalten um ein im Bereich des Seitenwandabschnitts befindliches Hindernis herumlenken. Unter den Begriffen "Seitenwand" und "Seitenwandabschnitt" werden nachfolgend alle Arten von Seitenwandbereichen eines Fahrzeugs verstanden, sei es der Bereich einer Fahrzeugsäule, einer Seitenscheibe oder eines beliebigen anderen Bereichs.

Ein wesentlicher Vorteil der erfindungsgemäßen Seitenairbageinrichtung ist darin zu sehen, dass stets ein vollständiges und zuverlässiges Entfalten des Airbags sichergestellt ist; denn der Airbag wird ein etwaiges Hindernis durch die erfindungsgemäßen Entfaltungssteuerungsmittel zuverlässig "umgehen".

Erfinderseitig wurde festgestellt, dass besonders die Fahrzeugsäulenverkleidung ein erhebliches Hindernis beim Entfalten eines Seitenairbags darstellt. Insbesondere die Verkleidung der so genannten B-Säule erschwert und verzögert bei handelsüblichen Seitenairbageinrichtungen regelmäßig das Entfalten eines im Dachbereich und damit oberhalb der Fahrzeugsäulenverkleidung seitlich angebrachten Airbags. Um dieses Problem zu lösen, ist gemäß einer vorteilhaften Weiterbildung der Seitenairbageinrichtung vorgesehen, dass die Entfaltungssteuerungsmittel derart ausgestaltet sind, dass sie den Airbag um eine Fahrzeugsäulenverkleidung als Hindernis herumlenken. Ist der Gassack also oberhalb der Fahrzeugsäulenverkleidung angebracht, so sind die Entfaltungssteuerungsmittel vorzugsweise derart ausgestaltet, dass sie den Airbag bei dessen nach unten gerichtetem Entfaltungsvorgang an der Fahrzeugsäulenverkleidung vorbeilenken.

Um sicherzustellen, dass der Airbag im Bereich außerhalb von Hindernissen richtig, also möglichst dicht an dem abzudeckenden Seitenwandabschnitt positioniert wird, sind die Entfaltungssteuerungsmittel derart ausgestaltet, dass sie den Airbag im Bereich außerhalb des Hindernisses in Richtung Seitenwandabschnitt drücken.

Im Hinblick auf eine möglichst optimale Positionierung des Airbags wird es als vorteilhaft angesehen, wenn die Entfaltungssteuerungsmittel durch eine gekrümmte Formgestaltung des Airbags gebildet sind; konkret ist der entfaltete Airbag im Bereich von Hindernissen bevorzugt von diesen weggekrümmt und außerhalb von Hindernissen zum abzudeckenden Seitenwandabschnitt hingekrümmt. Der entfaltete Airbag ist demgemäß somit vorzugsweise in Fahrzeug-Y-Richtung - also in oder entgegen der Fahrzeug-Y-Richtung - gekrümmt und weist beispielsweise eine Art "S-Form" auf.

Die Krümmung des Airbags kann beispielsweise dadurch erreicht werden, dass der Gassackzuschnitt des Airbags asymmetrisch ausgestaltet ist. Ist der Airbag mit einer dem Fahrzeuginsassen zugewandten und einer dem Fahrzeuginsassen abgewandten Materiallage ausgestattet, so können diese beiden Materiallagen unterschiedliche Konturen aufweisen und/oder asymmetrisch verbunden sein.

Um eine Asymmetrie und damit eine Verkrümmung des Airbags zu erreichen, sind darüber hinaus auch weitere Maßnahmen geeignet, von denen nachfolgend die besonders geeigneten beispielhaft erwähnt werden sollen: Beispielsweise ist es möglich, dass zumindest eine der beiden Materiallagen einseitig gerafft ist und/oder dass zumindest eine der beiden Materiallagen durch Einbringen, insbesondere Einnähen oder Einkleben, einer Materialfalte verkürzt ist. Alternativ oder auch zusätzlich kann z. B. in zumindest einer der beiden Materiallagen eine Umfaltung vorgenommen sein. Alternativ oder auch zusätzlich kann in zumindest einer der beiden Materiallagen zusätzliches Airbagmaterial eingesetzt sein, beispielsweise "linsen"-förmiges, Airbagmaterial.

Der Airbag weist neben einer den Seitenwandabschnitt abdeckenden Nutzkammer zusätzlich mindestens eine Positionierkammer auf, die allein oder in Kombination mit anderen Maßnahmen - wie z. B. den erläuterten Krümmungen im Airbag - die Entfaltungssteuerungsmittel bilden. Beispielsweise verdreht oder verkippt die Positionierkammer die Nutzkammer. Im Bereich eines potentiellen Hindernisses wird die Positionierkammer an der dem Fahrzeuginsassen abgewandten Seite des Airbags entfaltet; dadurch wird erreicht, dass die Positionierkammer die Nutzkammer in Richtung zum Fahrzeuginsassen drückt und damit vom Hindernis wegdrückt.

In Bereichen außerhalb von Hindernissen liegt eine weitere Positionierkammer vor die an der dem Fahrzeuginsassen zugewandten Seite des Airbags entfaltet wird und die Nutzkammer in Richtung des abzudeckenden Seitenwandabschnitts drückt. Eine solche Anordnung erreicht, dass der Airbag in Richtung des abzudeckenden Seitenwandabschnitts gedrückt wird und nicht absteht.

Besonders einfach und damit vorteilhaft lassen sich die Positionierkammer und die Nutzkammer herstellen, wenn das Airbagmaterial der Positionierkammer und das Airbagmaterial der Nutzkammer auf unterschiedlichen Seiten einer durch Befestigungspunkte des Airbags gebildeten, gedachten Linie liegen.

Bevorzugt bildet die Positionierkammer außerdem einen zusätzlichen Schutzbereich, durch den der Kopf des Fahrzeuginsassen vor einem Auftreffen auf dem Dachrahmen des Fahrzeugs geschützt wird. Die Positionierkammer weist in diesem Falle eine "Doppelfunktion" auf, nämlich die Funktion des Positionierens bzw. Herumlenkens des Airbags um Hindernisse und darüber hinaus eine unmittelbare Schutzfunktion durch ein Abdecken eines Dachrahmenbereichs des Fahrzeugs.

Der Airbag kann in der Seitenairbageinrichtung beispielsweise derart untergebracht sein, dass die Materiallagen der Positionierkammer zusammen mit den Materiallagen der Nutzkammer eingefaltet werden; alternativ ist auch ein separates Falten der beiden Kammern möglich. Bezüglich des Faltens des Airbags wird es als vorteilhaft angesehen, wenn die Materiallagen der Nutzkammer durch Rollen zusammengefaltet und/oder zik-zak-gefaltet werden.

Die Materiallagen der Positionierkammer(n) können um die zusammengefalteten Materiallagen der Nutzkammer beispielsweise auch ganz oder teilweise herumgewickelt werden.

Im Übrigen können die Entfaltungssteuerungsmittel auch ein oder mehrere Steuerbänder umfassen, die das Entfalten des Airbags steuern. Vorzugsweise ist die Länge eines solchen Steuerbandes kleiner als der Abstand der Befestigungspunkte des Steuerbands am Gassack in dessen entfaltetem Zustand. Die Steuerbänder können beispielsweise mit dem Gassack zusammen eingefaltet werden; alternativ können die Steuerbänder auch um den zusammengefalteten Gassack herumgelegt werden.

Vorzugsweise reißen die Steuerbänder bei Überschreiten einer vordefinierten Belastung vom Gassack ab; ein solches Abreißen kann beispielsweise vorgesehen sein, nachdem der Airbag beim Entfalten an dem zu "umschiffenden" Hindernis durch das jeweilige Steuerband vorbeigeführt wurde und die Steuerbänder für die weitere Funktion des Airbags ohne Belang sind oder nachteilig wären.

Die Erfindung wird nachfolgend anhand von Ausführungsbeispielen erläutert; dabei zeigen
- Fig. 1, 1A: ein Beispiel einer Seitenairbageinrichtung nach dem Stand der Technik mit einem symmetrischen Airbag,
- Fig. 2, 2A: ein erstes Beispiel einer nicht zur Erfindung gehörenden Seitenairbageinrichtung mit einem asymmetrischen Airbag durch gerafftes Überschussgewebe,
- Fig. 3, 3A, 3B: ein zweites Beispiel einer nicht zur Erfindung gehörenden Seitenairbageinrichtung mit einem asymmetrischen Airbag durch eingesetztes Zusatzgewebe,
- Fig. 4 - 4E: ein Ausführungsbeispiel einer erfindungsgemäßen Seitenairbageinrichtung mit zwei Positionierkammern, dabei zeigen

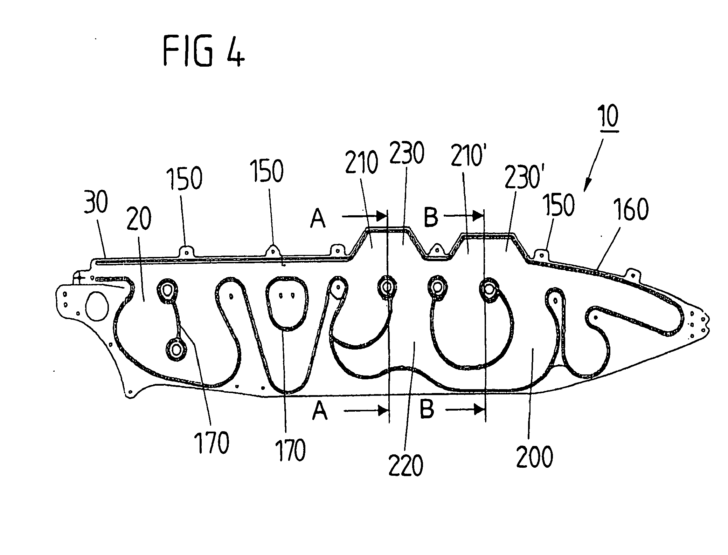

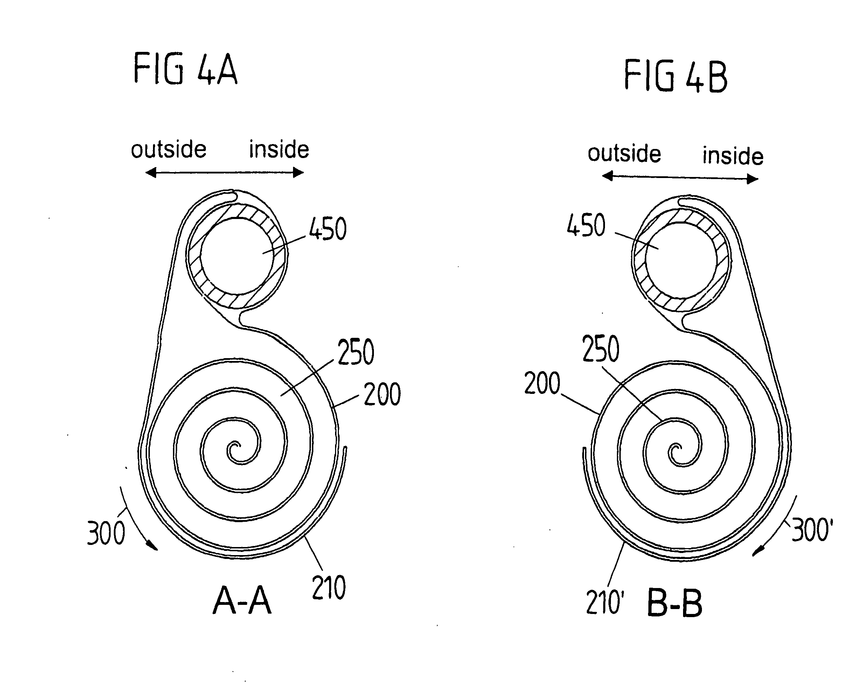

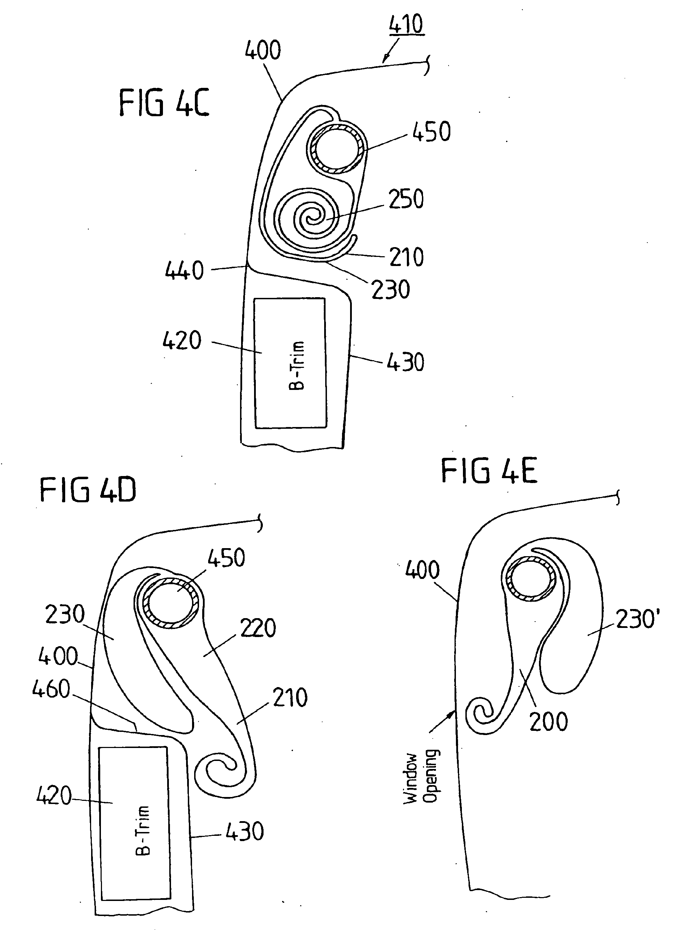

- Fig. 4: eine Draufsicht auf die Gewebelagen des Airbags vor dem Zusammenlegen des Airbags,
- Fig. 4A: die Seitenairbageinrichtung im Schnitt AA gemäß Fig. 4,
- Fig. 4B: die Seitenairbageinrichtung im Schnitt BB gemäß Fig. 4,
- Fig. 4C: die Seitenairbageinrichtung im Schnitt AA gemäß Fig. 4 in ihrem im Fahrzeug eingebauten Zustand,
- Fig. 4D: die Seitenairbageinrichtung im Schnitt AA gemäß Fig. 4 im teilweise entfalteten Zustand und
- Fig. 4E: die Seitenairbageinrichtung im Schnitt BB gemäß Fig. 4 im teilweise entfalteten Zustand, sowie

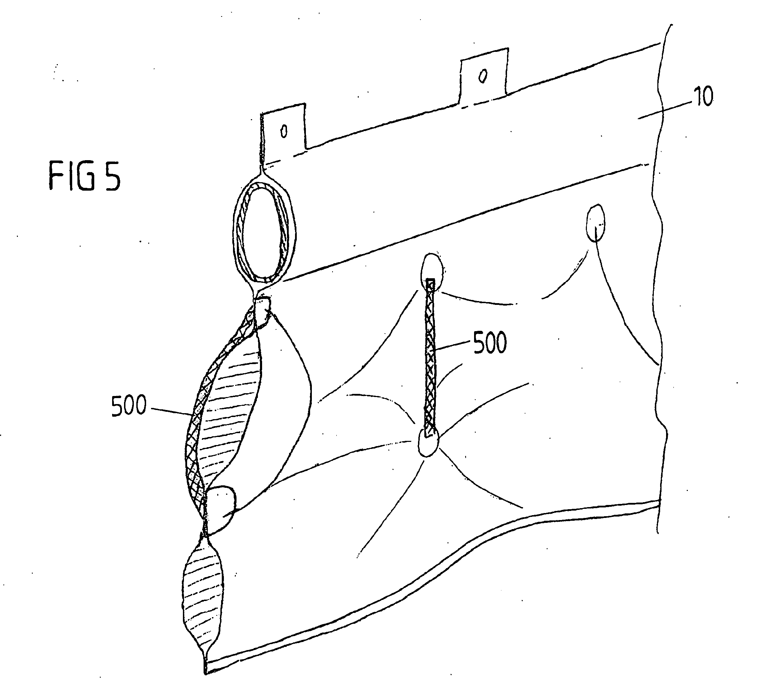

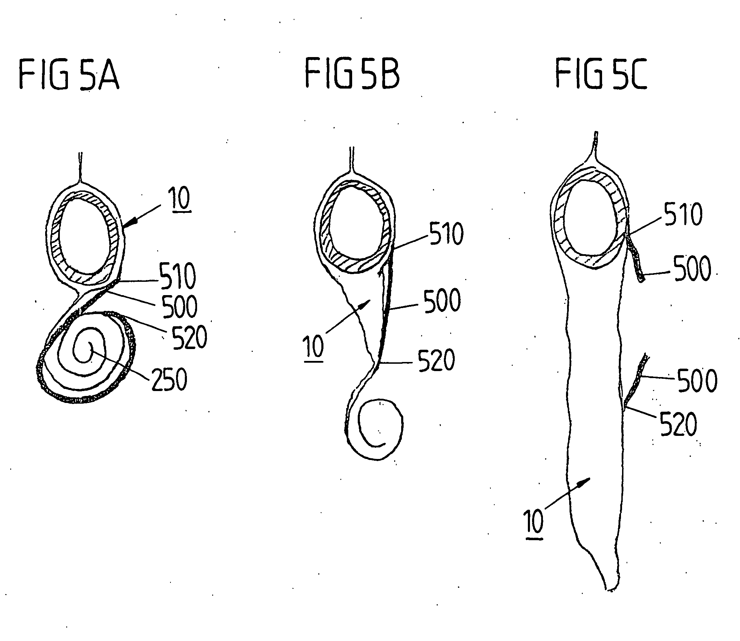

- Fig. 5 - 5C: ein viertes Beispiel einer nicht zur Erfindung gehörenden Seitenairbageinrichtung mit einem Positionierband.

In den Figuren werden für identische oder vergleichbare Komponenten stets dieselben Bezugszeichen verwendet.

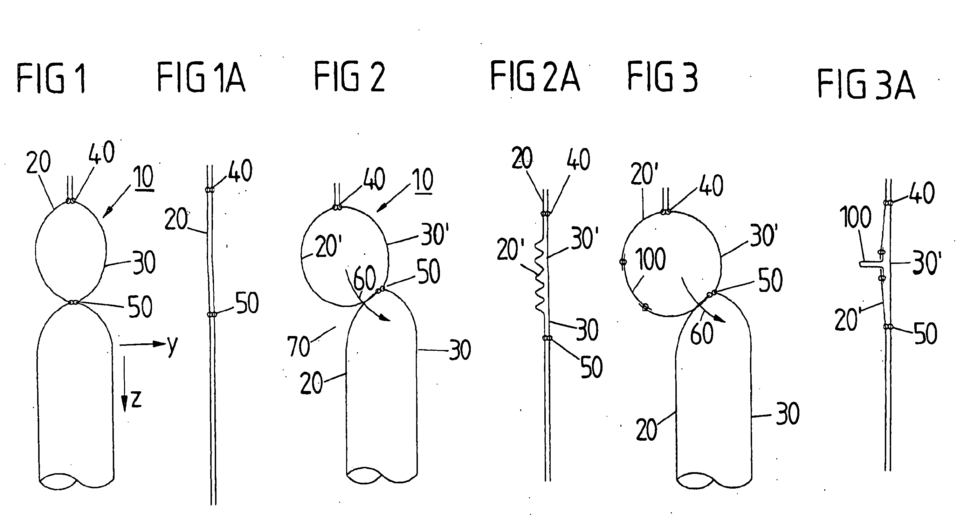

In der Figur 1 erkennt man einen Airbag (Gassack) 10 nach dem Stand der Technik. Der Airbag 10 umfasst zwei Materiallagen 20 und 30 aus Gewebe, also Gewebelagen. Die beiden Materiallagen 20 und 30 weisen jeweils dieselbe Kontur auf und sind unter anderem durch Nähte 40 und 50 symmetrisch vernäht. Es bildet sich somit ein Airbag, der im entfalteten Zustand in Fahrzeug-Y-Richtung ungekrümmt ist und somit bezüglich seiner Querschnittsebene symmetrisch ausgebildet ist.

Da der Airbag 10 in Fahrzeug-Y-Richtung ungekrümmt ist, kann es bei der Entfaltungsbewegung des Airbags nach unten - also in Fahrzeug-Z-Richtung - dazu kommen, dass der Airbag 10 gegen ein vertikales Hindernis stößt. Ist der Airbag 10 beispielsweise oberhalb einer Säulenverkleidung des Fahrzeugs, beispielsweise oberhalb der Verkleidung der B-Säule, angeordnet, so kann der Airbag 10 beim Entfalten gegen diese Säulenverkleidung stoßen, wodurch das Entfalten des Airbags 10 behindert, zumindest verzögert wird.

Die Materiallagen 20 und 30 des Airbags 10 sind im unaufgeblasenen Zustand nochmals in der Figur 1A gezeigt.

In der Figur 2 ist ein erstes Beispiel für eine nicht zur Erfindung gehörende Seitenairbageinrichtung dargestellt. Man erkennt, dass die beiden Materiallagen 20 und 30 durch die beiden Nähte 40 und 50 asymmetrisch miteinander vernäht sind; konkret ist ein Abschnitt 20' der Materiallage 20 größer als der diesem Abschnitt 20' gegenüber liegende Abschnitt 30' der Materiallage 30. Aufgrund dieses Größenunterschiedes der beiden Materiallagen kommt es zu einer Krümmung des Airbags 10 beim Entfalten. Diese Krümmung ist in der Figur 2 mit dem Bezugszeichen 60 angedeutet; dadurch, dass der Abschnitt 30' kleiner als der Abschnitt 20' bemessen ist, wird der Airbag 10 in der Figur 2 also nach rechts gekrümmt. Würde sich in der Figur 2 auf der linken Seite ein Hindernis befinden, das beispielhaft nur durch das Bezugszeichen 70 angedeutet ist, so würde der Airbag 10 beim Entfalten dieses Hindernis 70 "umgehen"; das Entfalten des Airbags 10 würde somit durch das Hindernis 70 nicht behindert werden.

Bei dem Beispiel gemäß der Figur 2 werden durch die Ausgestaltung der Materiallagen 20 und 30 bzw. durch deren Verarbeitung - hier Schaffen eines Überschussgewebes auf einer Materiallagenseite durch einseitiges Raffen einer Materiallage - Entfaltungssteuerungsmittel gebildet, die eine Airbagkrümmung hervorrufen.

Die beiden Materiallagen 20 und 30 sind im nicht aufgeblasenen Zustand des Airbags 10 zum besseren Verständnis nochmals in der Figur 2A gezeigt. Man erkennt insbesondere den "gerafften" Materialbereich 20' der Materiallage 20.

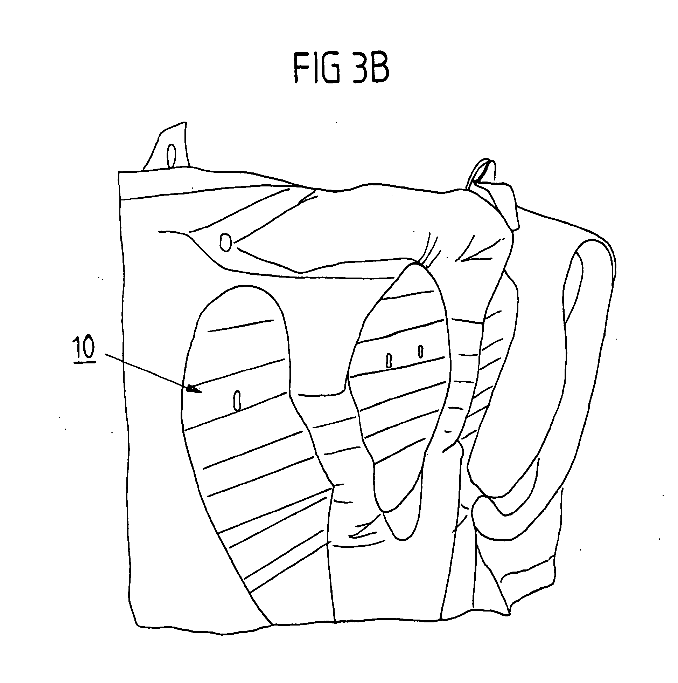

In der Figur 3 ist ein zweites Beispiel das nicht zur Erfindung gehört, gezeigt. Man sieht, dass die Materiallage 20 unterbrochen ist und ein zusätzliches Gewebestück 100 eingenäht ist. Diese Gewebestück 100 führt zu einer Vergrößerung des Abschnitts 20' der Materiallage 20 und damit zu einer Asymmetrie, die der durch einseitiges Raffen bewirkten Asymmetrie gemäß den Figuren 2 und 2A von der Wirkung her vergleichbar ist. Konkret wird ebenfalls eine Wölbung bzw. Krümmung des Gassacks 10 hervorgerufen, die mit einem Pfeil mit dem Bezugszeichen 60 visualisiert ist. Die Figur 3A zeigt die Materiallagen im gasleeren Zustand.

Die Figur 3B zeigt den Airbag 10 gemäß dem zweiten Beispiel im aufgeblasenen Zustand in einer dreidimensionalen Darstellung. Man erkennt, dass durch die Asymmetrie und die damit einhergehende Krümmung des Airbags erreicht wird, dass der Airbag abschnittsweise einen größeren Abstand von der abzudeckenden Fahrzeugseitenwand aufweist als an seinen übrigen Abschnitten.

Anhand der Figuren 4 bis 4E wird nun ein Ausführungsbeispiel der Erfindung erläutert.

In der Figur 4 sieht man die beiden Materiallagen 20 und 30 des Airbags 10 in der Draufsicht. Durch Befestigungspunkte 150, beispielsweise Befestigungslöcher, des Airbags 10 wird eine fiktive bzw. gedachte Befestigungslinie 160 gebildet, entlang derer der Airbag 10 beispielsweise im Bereich eines seitlichen Dachholmes des Fahrzeugs angebracht wird. Außerdem erkennt man in der Figur 4 Verbindungsbereiche 170, in denen die beiden Materiallagen 20 und 30 miteinander verbunden sind. Die Verbindungsbereiche 170 können beispielsweise durch Nähte oder Klebeverbindungen gebildet sein; im Falle von Nahtverbindungen sind diese vorzugsweise abgedichtet, zum Beispiel mit auf den beiden Materiallagen 20 und 30 aufgebrachten Silikonspuren.

Die beiden Materiallagen 20 und 30 weisen jeweils drei Gassackabschnitte auf, die in der Figur 4 mit den Bezugszeichen 200, 210 und 210' bezeichnet sind. Die Gassackabschnitte 200 der beiden Materiallagen 20 und 30 befinden sich unterhalb der Befestigungslinie 160 und bilden eine Nutzkammer 220 des Airbags 10. Die Nutzkammer 220 entfaltet sich im Falle eines Unfalls an der Seitenwand des Fahrzeugs und bildet einen den Fahrzeuginsassen schützenden Abschnitt des Airbags 10.

Die beiden Gassackabschnitte 210 und 210' der beiden Materiallagen 20 und 30 bilden Entfaltungssteuerungsmittel; konkret bilden die beiden Gassackabschnitte 210 und 210', die jeweils oberhalb der Befestigungslinie 160 angeordnet sind, zwei Positionierkammern 230 und 230' des Airbags 10. Die Funktionsweise der beiden Positionierkammern wird im Zusammenhang mit den Figuren 4A bis 4E erläutert.

Die Figuren 4A und 4B zeigen beispielhaft, wie die Materiallagen 20 und 30 des Airbags 10 zusammengelegt werden können; Figur 4A zeigt dabei den Airbag 10 im Querschnitt entlang der Schnittlinie AA gemäß der Figur 4 und die Figur 4B den Airbag 10 im Querschnitt entlang der Schnittlinie BB gemäß der Figur 4. Man erkennt, dass die Gassackabschnitte 200 der beiden Materiallagen 20 und 30 zusammengerollt sind; alternativ könnten die beiden Gassackabschnitte 200 auch zik-zak-gefaltet oder gerollt und zik-zak-gefaltet sein.

Die Gassackabschnitte 210 und 210' der beiden Materiallagen 20 und 30 sind bei dem Ausführungsbeispiel gemäß der Figur 4 nicht mit den Gassackabschnitten 200 zusammengerollt, sondern um die aus den Gassackabschnitten 200 gebildeten Materialrolle 250 herumgelegt. Selbstverständlich könnten die Gassackabschnitte 210 und 210' auch auf andere Weise zusammengelegt werden, beispielsweise könnten sie in die Materialrolle 250 mit eingelegt oder eingerollt werden; wichtig ist jedoch, dass sich der Airbag 10 schnellstmöglich entfalten kann, um einen optimalen Schutz für den Fahrzeuginsassen sicherzustellen.

In den beiden Figuren 4A und 4B sieht man außerdem, dass die beiden Gassackabschnitte 210 und 210 unterschiedlich um die Materialrolle 250 herumgelegt sind. So ist der Gassackabschnitt 210 entgegen dem Uhrzeigersinn (Pfeilrichtung 300) und der Gassackabschnitt 210' entlang des Uhrzeigersinns (Pfeilrichtung 300') um die Materialrolle 250 herumgelegt. Der Vorteil dieser unterschiedlichen Behandlung der beiden Gassackabschnitte 210 und 210' wird nachfolgend im Zusammenhang mit den Figuren 4C bis 4E erläutert.

In der Figur 4C sieht man den Airbag 10 im "eingebauten" Zustand im Querschnitt entlang der Schnittlinie AA (von hinten gesehen). Man erkennt einen Abschnitt 400' einer Fahrzeugseitenwand 400 eines nur teilweise dargestellten Fahrzeugs 410 sowie eine Fahrzeugsäule 420 des Fahrzeugs 410; bei der Fahrzeugsäule 420 kann es sich beispielsweise um eine B-Säule des Fahrzeugs 410 handeln. Die Fahrzeugsäule 420 ist beispielsweise aus optischen Gründen mit einer Säulenverkleidung 430 verkleidet, die sich bis zu einer oberen Stelle 440 der Seitenwand erstreckt.

Oberhalb dieser oberen Stelle 440 ist der Airbag 10 innerhalb einer Seitenairbageinrichtung des Fahrzeugs 410 montiert. Man erkennt die Materialrolle 250 sowie den Gassackabschnitt 210 der Positionierkammer 230. Außerdem ist ein Gasrohr 450 erkennbar, durch das Gas eines nicht gezeigten Gasgenerators in den Airbag 10 eingeblasen wird.

In der Figur 4D ist gezeigt, wie der Airbag 10 entfaltet wird - also nach Eintritt einer Unfall- oder Gefahrensituation. Man erkennt, wie die Gassackabschnitte 210 der beiden Materiallagen 20 und 30 um die Säulenverkleidung 430 der Fahrzeugsäule 420 herumgeführt werden, und zwar von der Positionierkammer 230, die im wesentlichen vor der Nutzkammer 220 - zumindest schneller als die Nutzkammer 220 - aufgeblasen wird und die die Gassackabschnitte 210 von der Säulenverkleidung 430 wegdrückt. Aufgrund dieses Wegdrückens wird verhindert, dass die Gassackabschnitte 210 auf der Oberseite 460 der Säulenverkleidung 430 aufstoßen können und dadurch ein Entfalten der Nutzkammer 220 behindert und/oder verzögert wird. Um das Wegdrücken der Nutzkammer 220 zu ermöglichen, wird die Positionierkammer 230 zwischen der Seitenwand 400 und der Nutzkammer 220 entfaltet; die Positionierkammer 230 befindet sich also auf der dem Fahrzeuginsassen abgewandten Seite des Airbags 10.

Um nun zu verhindern, dass durch die Positionierkammer 230 der Airbag 10 von der Seitenwand 400 zu weit weggedrückt wird und ein wirksamer Schutz des Fahrzeuginsassen reduziert oder verhindert wird, ist die Positionierkammer 230' im Bereich außerhalb der B-Säule vorgesehen (vgl. Figur 4E) ; diese Positionierkammer 230' ist - wie bereits erläutert - relativ zur Nutzkammer 220 anders herum als die Positionierkammer 230 angeordnet. Die Positionierkammer 230' entfaltet sich somit auf der dem Fahrzeuginsassen zugewandten Seite des Airbags 10 bzw. auf der der Seitenwand 400 abgewandten Seite des Airbags 10. Die Positionierkammer 230' drückt nach ihrem Entfalten die Materiallagen 20 und 30 der Nutzkammer 220 in Richtung Seitenwand 400 und bewirkt dadurch, dass der Airbag 10 an die Seitenwand 400 gedrückt wird; dies zeigt die Figur 4E im Detail.

Ein Andrücken des Airbags 10 an die Seitenwand 400 sollte vorzugsweise in allen Bereichen außerhalb von Hindernissen wie der Säulenverkleidung 430 vorgesehen werden, um einen besonders wirksamen Schutz des Fahrzeuginsassen zu erreichen. Insbesondere im Bereich von Seitenscheiben der Seitenwand ist ein Andrücken des Airbags 10 wichtig.

Zum Positionieren des Airbags 10 sind bei dem Ausführungsbeispiel gemäß der Figur 4 die beiden Positionierkissen 230 und 230' vorgesehen. Zusätzlich können am Airbag 10 auch Steuerbänder - sozusagen - Positionierbänder vorgesehen werden, mit denen das erläuterte Herumführen der Nutzkammer 220 um Hindernisse wie der Säulenverkleidung 430 bewirkt wird. Die Steuerbänder können so angebracht sein, dass sie nach Überschreiten einer vorgegebenen Maximalkraft abreißen; die Maximalkraft kann beispielsweise so bemessen sein, dass es zu einem Abreißen kommt, nachdem die Nutzkammer 220 am Hindernis, beispielsweise an der B-Säulenverkleidung, vorbeigeführt worden ist.

Ein nicht zur Erfindung gehörendes Beispiel eines Airbags 10 mit Positionierbändern (bzw. Steuerbändern oder Spannbändern) zeigen die Figuren 5 bis 5C. In der Figur 5 sieht man den Airbag 10 in einer dreidimensionalen Darstellung im Schnitt schräg von der Seite. Zwei der Positionierbänder sind jeweils mit dem Bezugszeichen 500 bezeichnet. Die Figur 5A zeigt den Airbag 10 im Querschnitt vor dem Aufblasen: Man erkennt das Spannband 500 sowie die Materialrolle 250 bestehend aus den Materiallagen des Airbags 10. Das Spannband 500 ist an zwei Befestigungspunkten 510 und 520 am Airbag 10 befestigt.

In der Figur 5B ist erkennbar, wie das Positionierband 500 das Entfalten des Airbags 10 steuert bzw. beeinflusst. Diese Beeinflussung tritt auf, da der Abstand zwischen den beiden Befestigungspunkten 510 und 520 größer als die Länge des Spannbandes 500 ist; das Spannband wird also vollkommen gestrafft und hält die beiden Befestigungspunkte 510 und 520 "zusammen". Durch dieses Zusammenhalten wird das Entfalten des Airbags 10 derart beeinflusst, dass der Airbag 10 beispielsweise um Hindernisse des Fahrzeugs (z. B. B-Säulenverkleidung) herumgelenkt wird.

Nachdem der Airbag 10 an dem störenden Hindernis vorbeigelenkt wurde, ist das Positionierband 500 zum Weg- oder Umlenken des Airbags 10 nicht mehr erforderlich; das Positionierband 500 kann daher derart ausgestaltet oder am Airbag 10 angebracht sein, dass es von einer oder beiden Befestigungsstellen 510 bzw. 520 abreißt oder zwischen den beiden Befestigungsstellen - beispielsweise in seinem Mittenbereich - durchreißt. Dies zeigt beispielhaft die Figur 5C.

### Bezugszeichenliste

- 10: Airbag
- 20: Materiallage
- 20': Abschnitt der Materiallage
- 30: Materiallage
- 30': Abschnitt der Materiallage
- 40, 50: Nähte
- 60: Krümmung
- 70: Hindernis
- 100: Zusätzliches Gewebestück
- 150: Befestigungspunkte
- 160: Befestigungslinie
- 170: Verbindungsbereiche
- 200, 210, 210': Gassackabschnitte
- 220: Nutzkammer
- 230, 230': Positionierkammern
- 250: Materialrolle
- 300, 300': Pfeilrichtungen
- 400: Fahrzeugseitenwand
- 410: Fahrzeug
- 420: Fahrzeugsäule
- 430: Säulenverkleidung
- 440: Obere Stelle
- 460: Oberseite der Säulenverkleidung
- 500: Positionierband
- 510: Befestigungsstelle
- 520: Befestigungsstelle

## Patentansprüche

1. Seitenairbageinrichtung für ein Fahrzeug (410) mit einem Airbag (10), der im Unfallfall entfaltet wird und im entfalteten Zustand einen Seitenwandabschnitt (400') des Fahrzeugs (410) abdeckt, wobei
die Seitenairbageinrichtung Entfaltungssteuerungsmittel aufweist, die den Airbag (10) bei dessen Entfalten um ein im Bereich des Seitenwandabschnitts (400') befindliches Hindernis (430) herumlenken, und der Airbag (10) zumindest eine den Seitenwandabschnitt (400') abdeckende Nutzkammer (220) und zumindest eine Positionierkammer (230) aufweist, die die Entfaltungssteuerungsmittel bildet, wobei die Positionierkammer (230) an der dem Fahrzeuginsassen abgewandten Seite des Airbags (10) so entfaltet wird, dass sie die Nutzkammer (220) in Richtung des Fahrzeuginsassen drückt,
**gekennzeichnet durch**
eine weitere Positionierkammer (230'), die so angeordnet ist, dass sie sich an der dem Fahrzeuginsassen zuwandten Seite des Airbags (10) außerhalb des Hindernisses so entfaltet, dass sie die Nutzkammer (220) in Richtung des abzudeckenden Seitenwandabschnitts (400') drückt.

2. Seitenairbageinrichtung nach Anspruch 1, **dadurch gekennzeichnet, dass** die Entfaltungssteuerungsmittel derart ausgestaltet sind, dass sie den Airbag (10) um eine Fahrzeugsäulenverkleidung (430) als Hindernis herumlenken.

3. Seitenairbageinrichtung nach Anspruch 2, **dadurch gekennzeichnet, dass** der Airbag (10) oberhalb der Fahrzeugsäulenverkleidung (430) angebracht ist und die Entfaltungssteuerungsmittel derart ausgestaltet sind, dass sie den Airbag (10) beim Entfalten in Richtung nach unten an der Fahrzeugsäulenverkleidung (430) vorbei lenken.

4. Seitenairbageinrichtung nach einem der voranstehenden Ansprüche, **dadurch gekennzeichnet, dass** die Entfaltungssteuerungsmittel **dadurch** gebildet sind, dass der entfaltete Airbag (10) in Fahrzeug-Y-Richtung gekrümmt ausgeformt ist.

5. Seitenairbageinrichtung nach Anspruch 4, **dadurch gekennzeichnet, dass** der entfaltete Airbag (10) im Bereich des Hindernisses (430) von diesem weggekrümmt ist und außerhalb des Hindernisses zum abzudeckenden Seitenwandabschnitt (400') hingekrümmt ist.

6. Seitenairbageinrichtung nach einem der voranstehenden Ansprüche 4 oder 5, **dadurch gekennzeichnet, dass** die Entfaltungssteuerungsmittel **dadurch** gebildet sind, dass der Gassackzuschnitt des Airbags asymmetrisch ausgestaltet ist.

7. Seitenairbageinrichtung nach einem der voranstehenden Ansprüche 4 bis 6, **dadurch gekennzeichnet, dass** der Airbag (10) eine dem Fahrzeuginsassen zugewandte und eine dem Fahrzeuginsassen abgewandte Materiallage aufweist und dass die beiden Materiallagen unterschiedliche Konturen aufweisen und/oder asymmetrisch verbunden sind.

8. Seitenairbageinrichtung nach Anspruch 7, **dadurch gekennzeichnet, dass** zumindest eine der beiden Materiallagen (20) einseitig gerafft ist.

9. Seitenairbageinrichtung nach einem der voranstehenden Ansprüche 7 oder 8, **dadurch gekennzeichnet, dass** zumindest eine der beiden Materiallagen durch Einbringen, insbesondere Einnähen oder Einkleben, einer Materialfalte verkürzt ist.

10. Seitenairbageinrichtung nach einem der voranstehenden Ansprüche 7 bis 9, **dadurch gekennzeichnet, dass** in zumindest einer der beiden Materiallagen eine Umfaltung vorgenommen ist.

11. Seitenairbageinrichtung nach einem der voranstehenden Ansprüche 7 bis 10, **dadurch gekennzeichnet, dass** zumindest in einer der beiden Materiallagen (20) zusätzliches Airbagmaterial (20') eingesetzt ist.

12. Seitenairbageinrichtung nach Anspruch 11, **dadurch gekennzeichnet, dass** das zusätzliche Airbagmaterial linsenförmig ist.

13. Seitenairbageinrichtung nach einem der vorhergehenden Ansprüche, **dadurch gekennzeichnet, dass** die Positionierkammer (230) die Nutzkammer (220) verdreht oder verkippt.

14. Seitenairbageinrichtung nach einem der voranstehenden Ansprüche, **dadurch gekennzeichnet, dass** das Airbagmaterial der Positionierkammer (230) und das Airbagmaterial der Nutzkammer (220) auf unterschiedlichen Seiten einer durch Befestigungspunkte (150) des Airbags (10) gebildeten, gedachten Linie (160) liegen.

15. Seitenairbageinrichtung nach einem der voranstehenden Ansprüche, **dadurch gekennzeichnet, dass** die Positionierkammer (230) einen zusätzlichen Schutzbereich bildet, durch den der Kopf des Fahrzeuginsassen vor dem Dachrahmen des Fahrzeugs geschützt wird.

16. Seitenairbageinrichtung nach einem der voranstehenden Ansprüche, **dadurch gekennzeichnet, dass** die Materiallagen der Nutzkammer (220) durch Rollen zusammengefaltet und/oder zik-zakgefaltet sind.

17. Seitenairbageinrichtung nach einem der voranstehenden Ansprüche, **dadurch gekennzeichnet, dass** der Airbag in der Seitenairbageinrichtung derart untergebracht ist, dass die Materiallagen der Positionierkammer zusammen mit den Materiallagen der Nutzkammer eingefaltet sind.

18. Seitenairbageinrichtung nach einem der voranstehenden Ansprüche, **dadurch gekennzeichnet, dass** der Airbag in der Seitenairbageinrichtung derart untergebracht ist, dass die Materiallagen der Positionierkammer (230) um die zusammengefalteten Materiallagen der Nutzkammer (220) ganz oder teilweise herumgewickelt sind.

19. Seitenairbageinrichtung nach einem der voranstehenden Ansprüche, **dadurch gekennzeichnet, dass** die Entfaltungssteuerungsmittel zumindest ein Steuerband umfassen, das das Entfalten des Airbags steuert.

20. Seitenairbageinrichtung nach Anspruch 19, **dadurch gekennzeichnet, dass** die Länge des Steuerbandes kleiner ist als der Abstand der Befestigungspunkte des Steuerbands am Airbag.

21. Seitenairbageinrichtung nach einem der voranstehenden Ansprüche 19 oder 20, **dadurch gekennzeichnet, dass** das Steuerband mit dem Airbag zusammen eingefaltet ist.

22. Seitenairbageinrichtung nach einem der voranstehenden Ansprüche 19 oder 20, **dadurch gekennzeichnet, dass** das Steuerband um den zusammengefalteten Airbag herumgelegt ist.

23. Seitenairbageinrichtung nach einem der voranstehenden Ansprüche, **dadurch gekennzeichnet, dass** das Steuerband bei Überschreiten einer vordefinierten Belastung vom Airbag abreißt.

## Claims

1. Side airbag device for a vehicle (410) with an airbag (10) which is deployed in the event of an accident and, in the deployed state, covers a side wall section (400') of the vehicle (410), wherein
the side airbag device has deployment control means which deflect the airbag (10) during its deployment around an obstacle (430) situated in the region of the side wall section (400'), and the airbag (10) has at least one usable chamber (220) covering the side wall section (400') and at least one positioning chamber (230) which forms the deployment control means, wherein the positioning chamber (230) is deployed on that side of the airbag (10) which faces away from the vehicle occupant, that it presses the usable chamber (220) in the direction of the vehicle occupant,
**characterized in that**
a further positioning chamber (230') which is arranged in such a manner that it is deployed on that side of the airbag (10) which faces the vehicle occupant in the region outside the obstacle (430), such that it presses the usable chamber (220) in the direction of the side wall section (400') to be covered.

2. Side airbag device according to Claim 1, **characterized in that** the deployment control means are designed in such a manner that they deflect the airbag (10) around a vehicle pillar trim (430) as the obstacle.

3. Side airbag device according to Claim 2, **characterized in that** the airbag (10) is fitted above the vehicle pillar trim (430) and the deployment control means are designed in such a manner that they deflect the airbag (10) past the vehicle pillar trim (430) during the deployment in the downwards direction.

4. Side airbag device according to one of the preceding claims, **characterized in that** the deployment control means are formed by the deployed airbag (10) being shaped in a curved manner in the Y-direction of the vehicle.

5. Side airbag device according to Claim 4, **characterized in that** the deployed airbag (10) is curved away from the obstacle (430) in the region thereof and outside the obstacle is curved towards the side wall section (400') to be covered.

6. Side airbag device according to one of the preceding Claims 4 or 5, **characterized in that** the deployment control means are formed by the gas bag blank of the airbag being of asymmetrical design.

7. Side airbag device according to one of the preceding Claims 4 to 6, **characterized in that** the airbag (10) has one material layer facing the vehicle occupant and one material layer facing away from the vehicle occupant, and **in that** the two material layers have different contours and/or are connected asymmetrically.

8. Side airbag device according to Claim 7, **characterized in that** at least one of the two material layers (20) is gathered on one side.

9. Side airbag device according to one of the preceding Claims 7 or 8, **characterized in that** at least one of the two material layers is shortened by inserting a material fold, in particular by sewing it in or gluing it in.

10. Side airbag device according to one of the preceding Claims 7 to 9, **characterized in that** a folding over is undertaken in at least one of the two material layers.

11. Side airbag device according to one of the preceding Claims 7 to 10, **characterized in that** additional airbag material (20') is used in at least one of the two material layers (20).

12. Side airbag device according to Claim 11, **characterized in that** the additional airbag material is lentil-shaped.

13. Side airbag device according to one of the preceding Claims, **characterized in that** the positioning chamber (230) rotates or tilts the usable chamber (220).

14. Side airbag device according to one of the preceding Claims, **characterized in that** the airbag material of the positioning chamber (230) and the airbag material of the usable chamber (220) lie on different sides of an imaginary line (160) formed by fastening points (150) of the airbag (10).

15. Side airbag device according to one of the preceding Claims, **characterized in that** the positioning chamber (230) forms an additional protective region by means of which the head of the vehicle occupant is protected from the roof frame of the vehicle.

16. Side airbag device according to one of the preceding Claims, **characterized in that** the material layers of the usable chamber (220) are folded together and/or folded in zig-zag form by means of rollers.

17. Side airbag device according to one of the preceding Claims, **characterized in that** the airbag is accommodated in the side airbag device in such a manner that the material layers of the positioning chamber are folded in together with the material layers of the usable chamber.

18. Side airbag device according to one of the preceding Claims, **characterized in that** the airbag is accommodated in the side airbag device in such a manner that the material layers of the positioning chamber (230) are entirely or partially wound around the folded-together material layers of the usable chamber (220).

19. Side airbag device according to one of the preceding claims, **characterized in that** the deployment control means comprise at least one control strap which controls the deployment of the airbag.

20. Side airbag device according to Claim 19, **characterized in that** the length of the control strap is smaller than the distance between the fastening points of the control strap on the airbag.

21. Side airbag device according to one of the preceding Claims 19 or 20, **characterized in that** the control strap is folded in together with the airbag.

22. Side airbag device according to one of the preceding Claims 19 or 20, **characterized in that** the control strap is placed around the folded-together airbag.

23. Side airbag device according to one of the preceding claims, **characterized in that** the control strap tears off from the airbag when a predefined load is exceeded.

## Revendications

1. Dispositif à airbag latéral pour un véhicule (410) comprenant un airbag (10) qui se déploie en cas d'accident et qui recouvre dans l'état déployé un tronçon de la paroi latérale (400') du véhicule (410), dans lequel
le dispositif à airbag latéral comprend des moyens de commande de déploiement qui font dévier l'airbag (10), lors de son déploiement, autour d'un obstacle (430) qui se trouve dans la région du tronçon de paroi latérale (400'), et l'airbag (10) comprend au moins une chambre utile (220) qui recouvre le tronçon de paroi latérale (400') et au moins une chambre de positionnement (230) qui forme les moyens de commande de déploiement, dans lequel la chambre de positionnement (230) est déployée du côté de l'airbag (10) détourné de l'occupant du véhicule de telle façon qu'elle pousse la chambre utile (220) en direction de l'occupant du véhicule,
**caractérisé par**
une autre chambre de positionnement (230') qui est agencée de telle façon qu'elle se déploie, du côté de l'airbag (10) tourné vers l'occupant du véhicule, à l'extérieur de l'obstacle de sorte qu'elle pousse la chambre utile (220) en direction du tronçon de paroi latérale (400') à recouvrir.

2. Dispositif à airbag latéral selon la revendication 1, **caractérisé en ce que** les moyens de commande de déploiement sont conçus de telle façon qu'ils font dévier l'airbag (10) autour d'un habillage de montant du véhicule (430) à titre d'obstacle.

3. Dispositif à airbag latéral selon la revendication 2, **caractérisé en ce que** l'airbag (10) est monté au-dessus de l'habillage de montant de véhicule (430), et **en ce que** les moyens de commande de déploiement sont conçus de telle façon que lors du déploiement, ils font dévier l'airbag (10) en direction du bas en passant à côté de l'habillage de montant de véhicule (430).

4. Dispositif à airbag latéral selon l'une des revendications précédentes, **caractérisé en ce que** les moyens de commande de déploiement sont réalisés du fait que l'airbag déployé (10) est formé de manière incurvée dans la direction Y du véhicule.

5. Dispositif à airbag latéral selon la revendication 4, **caractérisé en ce que**, dans la région de l'obstacle (430), l'airbag déployé (10) est incurvé en éloignement de celui-ci, et à l'extérieur de l'obstacle, il est incurvé en direction du tronçon de paroi latérale (400') à recouvrir.

6. Dispositif à airbag latéral selon l'une des revendications 4 ou 5 précédentes,
**caractérisé en ce que** les moyens de commande de déploiement sont formés par le fait que la coupe du coussin gonflable de l'airbag est conçue asymétrique.

7. Dispositif à airbag latéral selon l'une des revendications 4 à 6 précédentes, **caractérisé en ce que** l'airbag (10) comprend une couche de matériau tournée vers l'occupant du véhicule et une couche de matériau détournée de l'occupant du véhicule, et **en ce que** les deux couches de matériau présentent des contours différents et/ou sont reliées de manière asymétrique.

8. Dispositif à airbag latéral selon la revendication 7, **caractérisé en ce que** au moins l'une des deux couches de matériau (20) est froncée sur un côté.

9. Dispositif à airbag latéral selon l'une des revendications 7 ou 8 précédentes, **caractérisé en ce que** au moins l'une des deux couches de matériau est raccourcie par formation d'un pli dans le matériau, en particulier par couture ou par collage.

10. Dispositif à airbag latéral selon l'une des revendications 7 à 9 précédentes, **caractérisé en ce qu'**un pli en revers est exécuté dans au moins l'une des deux couches de matériau.

11. Dispositif à airbag latéral selon l'une des revendications 7 à 10 précédentes, **caractérisé en ce qu'**un matériau à airbag (20') supplémentaire est employé dans au moins l'une des deux couches de matériau (20).

12. Dispositif à airbag latéral selon la revendication 11, **caractérisé en ce que** le matériau à airbag supplémentaire est en forme de lentille.

13. Dispositif à airbag latéral selon l'une des revendications précédentes, **caractérisé en ce que** la chambre de positionnement (230) fait tourner ou fait basculer la chambre utile (220).

14. Dispositif à airbag latéral selon l'une des revendications précédentes, **caractérisé en ce que** le matériau à airbag de la chambre de positionnement (230) et le matériau à airbag de la chambre utile (220) se trouvent sur des côtés différents d'une ligne imaginaire (160) formée par les points de fixation (150) de l'airbag (10).

15. Dispositif à airbag latéral selon l'une des revendications précédentes, **caractérisé en ce que** la chambre de positionnement (230) forme une zone de protection supplémentaire au moyen de laquelle la tête de l'occupant du véhicule est protégée du cadre de la toiture du véhicule.

16. Dispositif à airbag latéral selon l'une des revendications précédentes, **caractérisé en ce que** les couches de matériau de la chambre utile (220) sont pliées ensemble par roulement et/ou pliées en zigzag.

17. Dispositif à airbag latéral selon l'une des revendications précédentes, **caractérisé en ce que** l'airbag est logé dans le dispositif à airbag latéral de telle façon que les couches de matériau de la chambre de positionnement sont intégrées par pliage ensemble avec les couches de matériau de la chambre utile.

18. Dispositif à airbag latéral selon l'une des revendications précédentes, **caractérisé en ce que** l'airbag est logé dans le dispositif à airbag latéral de telle façon que les couches de matériau de la chambre de positionnement (230) sont enroulées totalement ou partiellement autour des couches de matériau pliées ensemble de la chambre utile (220).

19. Dispositif à airbag latéral selon l'une des revendications précédentes, **caractérisé en ce que** les moyens de commande de déploiement comprennent au moins un ruban de commande, qui commande le déploiement de l'airbag.

20. Dispositif à airbag latéral selon la revendication 19, **caractérisé en ce que** la longueur du ruban de commande est inférieure à la distance des points de fixation du ruban de commande sur l'airbag.

21. Dispositif à airbag latéral selon l'une des revendications 19 ou 20 précédentes, **caractérisé en ce que** le ruban de commande est intégré par pliage ensemble avec l'airbag.

22. Dispositif à airbag latéral selon l'une des revendications 19 ou 20 précédentes, **caractérisé en ce que** le ruban de commande est posé autour de l'airbag plié par pliage.

23. Dispositif à airbag latéral selon l'une des revendications précédentes, **caractérisé en ce que** le ruban de commande se déchire vis-à-vis de l'airbag lors du dépassement d'une charge prédéfinie.
